(19) **Europäisches Patentamt**

**European Patent Office**

**Office européen des brevets**

(11) **EP 1 411 325 A2**

(12) **EUROPEAN PATENT APPLICATION**

| | |
|---|---|
| (43) Date of publication:<br>**21.04.2004 Bulletin 2004/17** | (51) Int Cl.⁷: **G01C 21/36** |

(21) Application number: **03078268.4**

(22) Date of filing: **16.10.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **16.10.2002 KR 2002063322**<br><br>(71) Applicant: **LG Electronics, Inc.**<br>**Seoul 150-875 (KR)** | (72) Inventor: **Hee Jeong, Kim**<br>**Seoul (KR)**<br><br>(74) Representative: **Skeppstedt, Anita**<br>**Albihns Göteborg AB,**<br>**Box 142**<br>**401 22 Göteborg (SE)** |

(54) **Method and apparatus for intersection guiding in navigation system**

(57) There is provided a method and apparatus for guiding an intersection in a navigation system, which is capable of efficiently creating an arrow that indicates an intersection turn guide. The method of the present invention includes the steps of: checking an intersection network to create a predetermined intersection based on a vehicle position information; creating a turn guide arrow to be displayed on the intersection; and simultaneously displaying the intersection and the turn guide arrow created thereon.

Fig.9

Approach road

EP 1 411 325 A2

**Description**

## BACKGROUND OF THE INVENTION

### Field of the Invention

The present invention relates to a navigation system, and more particularly, to a method and apparatus for guiding an intersection, which is capable of efficiently creating an arrow that indicates an intersection turn guide.

### Description of the Related Art

Various kinds of vehicles, such as vessels, airplanes and automobiles, widely use a navigation system or a global positioning system (hereinafter, referred to as a GPS) installed therein in order to check current positions and moving speeds thereof or to determine moving routes thereof.

Recently, research and development on apparatus for vehicles have been made increasingly and various products are commercially available.

Particularly, there has been provided a full navigation system in which a position of a vehicle is displayed on a map to thereby guide a vehicle to a recommended route. According to the full navigation system, a current position of a vehicle is calculated using information received from a GPS satellite and then displayed on a map.

Additionally, the full navigation system provides a driver with various information necessary for a driving of the vehicle, such as a driving direction of the vehicle, a distance to destination, a current moving speed of the vehicle, a route previously set by a driver, an optimum route to a destination, and the like.

The full navigation system receives a radio wave indicating latitude, longitude and altitude from a GPS satellite, calculates a current position of a vehicle, and visually or audibly provides a driver with a map information including the current position of the vehicle.

Generally, the full navigation system is provided with a GPS receiver for receiving a radio wave from a GPS satellite and calculating a coordinate of a current position, a sensor unit including a Gyro sensor and a speed sensor for sensing rotation angle and speed of each vehicle, and a storage unit for storing a map data.

However, since the full navigation system according to the related art displays only a position of a vehicle on a digital map displayed on a screen, a driver who is unskilled at the map or does not interpret the map quickly has difficulty in finding a desired destination.

Additionally, a concentration on the driving is degraded due to a complicated manipulation, so that an accident may be caused.

Meanwhile, in addition to the full navigation system, a turn-by-turn (TBT) navigation system that guides a route by using a turn-by-turn have come to the market.

In a route guidance graphic user interface (GUI) of the TBT navigation system, a basic and important function is an arrow indicating a direction.

The conventional route guidance is carried out using arrow images of go-straight, turn-left, turn-right and U-turn shapes. However, this method does not satisfy situations of actual intersections connected at various angles.

Particularly, in case a simple guide arrow image alone is used to guide an intersection in which angles between roads are small, a driver may be more confused because the driver does not properly distinguish a desired road from other roads of the intersection.

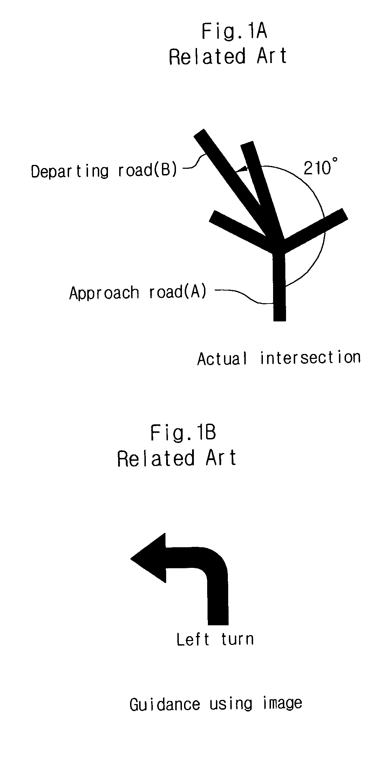

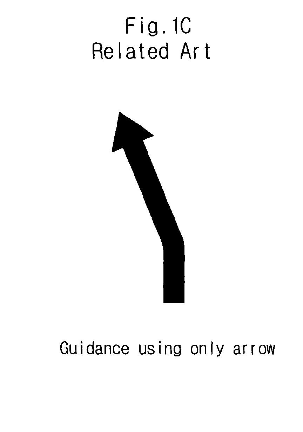

FIGs. 1B and 1C are exemplary views of guide arrows for an approach road in case a pattern of an intersection is dense in the conventional TBT navigation system.

FIG. 1A shows a simple pattern of an actual intersection in which all roads are connected to the approach road, which is the road where a vehicle approaches. As shown, the roads are connected to the approach road at various angles, and particularly, angles between a desired departing road and adjacent roads are small.

Accordingly, as shown in FIG. 1B, in case the conventional TBT navigation system performs a guidance of the intersection shown in figure 1A by using only the stored arrow images of go-straight, turn-left, turn-right and U-turn shapes, the driver may approach not the desired departing road but one of the adjacent roads at the intersection because the arrow image is not matched with the desired departing road. In other words, as shown in FIG. 1A, the roads connected to the approach road are stretched in four directions, and the desired departing road is at an angle of about 210° from the approach road in the counterclockwise direction. Therefore, as shown in FIG. 1B, in case the road is guided using the simple arrow image, the turn-left arrow image that is most similar to the desired departing road is used to indicate a direction of the desired departing road.

In this case, however, the driver may be confused at the turn because an image of the desired departing road is very different from the arrow image.

Even if the conventional TBT navigation system stores various guide arrow images in preparation for many possible cases, it is impossible to display accurate images of all actual intersections since there is a limitation in performance of the guidance of the intersection due to a characteristic of a vehicle information terminal.

Additionally, the conventional TBT navigation system is very inefficient because the method of displaying the turn image to guide the vehicle to the departing road at the intersection uses a large capacity of memory.

It is assumed that the arrow shown in FIG. 1C can represents free angles. In this case, when only the guide arrow having free angle is displayed, the driver may incorrectly determine the desired departing road if the approach road and the departing roads connected thereto are dense with each other.

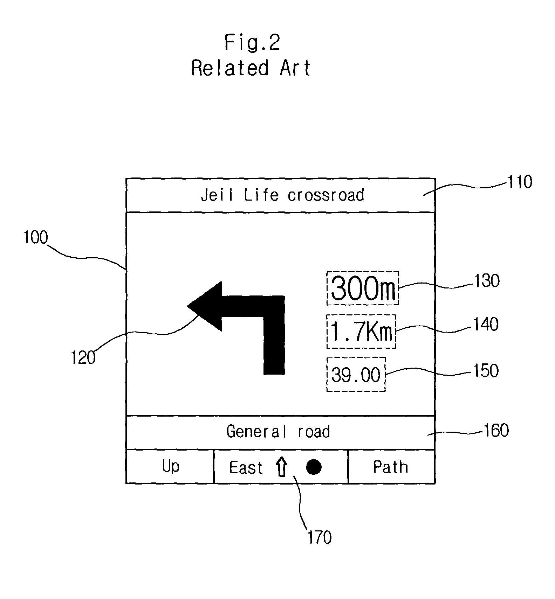

FIG. 2 is an exemplary view of a traffic information service in the conventional navigation system, in which only an intersection turn guide arrow is created to guide a vehicle to a recommended route.

If the driver selects a traffic information service through a manipulation of the navigation system and inputs a desired destination, an arrow and other traffic information for guiding the driver to the desired destination are displayed.

A name and direction 110 of the intersection, e.g., JEIL LIFE crossroad, is display on an upper portion of a screen 100 of the navigation system, and an intersection turn guide arrow image 120 is displayed on a middle portion. A remaining distance 130 to an intersection turn branch point, a remaining distance 140 to a desired destination and a time 150 required to reach the destination are displayed on a right side of the intersection turn guide arrow image 120. A road name 160 and a driving direction/GPS reception 170 are displayed on a lower portion of the screen 100.

In a navigation system constructed as above, however, in case the intersection turn guidance to the destination is displayed using the arrow image, the driver may be confused when determining the desired departing road at the intersection since there is a remarkable difference between the arrow image and the actual departing road.

Further, although the guide arrow images matched with the actual intersections are stored in preparation for many possible cases, the navigation system has a problem that its capacity is limited due to its characteristic.

## SUMMARY OF THE INVENTION

Accordingly, the present invention is directed to a method and apparatus for guiding an intersection that substantially obviates one or more problems due to limitations and disadvantages of the related art.

It is an object of the present invention to provide a method and apparatus for guiding an intersection in a navigation system, which is capable of efficiently creating an arrow rapidly when a vehicle approaches an approach road.

It is another object of the present invention to provide a method and apparatus for guiding an intersection in a navigation system, in which its visuality is improved by displaying a simplified shape of the intersection together with an arrow having free angle.

Additionally advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

According to a preferred embodiment of the present invention, a method for guiding an intersection includes the steps of: checking an intersection network to create a predetermined intersection based on a vehicle position information; creating a turn guide arrow to be displayed on the intersection; and simultaneously displaying the intersection and the turn guide arrow created thereon.

The step of creating the predetermined intersection includes the steps of: calculating an approaching angle of an approach road that the vehicle approaches and departing angles of a set of departing roads connected to the approach road from a predetermined set direction, and furthermore calculating the angles between the approach road and the set of departing roads; vertically placing the approach road; and representing the set of departing roads in reference of the approach road placed vertically by use of the calculated angles between the approach road and the departing roads.

The step of creating the turn guide arrow includes the steps of: arranging a basic arrow, the basic arrow being providing with a lower body, a center circle, an upper body and a head; if a vehicle is guided by selecting one of the departing roads, calculating a rotation angle by using the angle between the approach road and the selected departing road; and rotating the upper body and the head according to the calculated rotation angle.

According to another embodiment of the present invention, an apparatus for guiding an intersection includes: means for checking an intersection network to create a predetermined intersection based on a vehicle position information; means for create a turn guide arrow to be displayed on the intersection; and means for simultaneously displaying the intersection and the turn guide arrow created thereon.

According to further another embodiment of the present invention, a navigation system includes: means for storing data necessary to create an intersection; means for storing a basic arrow data; a memory storing a coordinate of an arrow for indicating a direction and a trigonometric function table; a central processing unit for guiding an intersection with a turn guide arrow by using the data necessary to create the intersection, the basic arrow data and the trigonometric function table; and means for displaying the intersection with the turn guide arrow, wherein the central processing unit includes: means for checking an intersection network to create a predetermined intersection based on a vehicle position information, the vehicle position information being stored together with other data necessary to create the intersection; and means for creating the turn guide arrow to be displayed on the created intersection.

It is to be understood that both the foregoing general description and the following detailed description of the present invention are exemplary and explanatory and are intended to provide further explanation of the present invention as claimed.

## BRIEF DESCRIPTION OF THE DRAWINGS

The accompanying drawings, which are included to provide a further understanding of the present invention and are incorporated in and constitute a part of this application, illustrate embodiment(s) of the present invention and together with the description serve to explain the principle of the present invention. In the drawings:

FIG.1A is an exemplary view of an intersection

FIGs. 1B and 1C are exemplary views of guide arrows for an approach road in case a pattern of an intersection is dense in a conventional TBT navigation system;

FIG. 2 is an exemplary view of a traffic information service in a conventional navigation system, in which only an intersection turn guide arrow is created to guide a vehicle to a recommended route;

FIG. 3 is a block diagram of a TBT navigation system according to the present invention;

FIG. 4 is a flowchart showing a method for guiding an intersection in a TBT navigation system according to a preferred embodiment of the present invention;

FIG. 5 is an exemplary view showing a method for calculating angles between roads of an intersection;

FIG. 6 is an exemplary view showing a process of creating an intersection in a simplified shape;

FIG. 7 is a view of an intersection created through an intersection simplifying process;

FIGs. 8A to 8C are views showing a process of creating a turn guide arrow;

FIG. 9 is an exemplary view showing a display of an intersection together with a turn guide arrow; and

FIGs. 10A to 10D are exemplary views showing an application of various actual intersections in a guidance of an intersection according to the present invention.

## DETAILED DESCRIPTION OF THE PREFERRED EMBODIMENTS

Reference will now be made in detail to a preferred embodiment of the present invention with reference to the attached drawings.

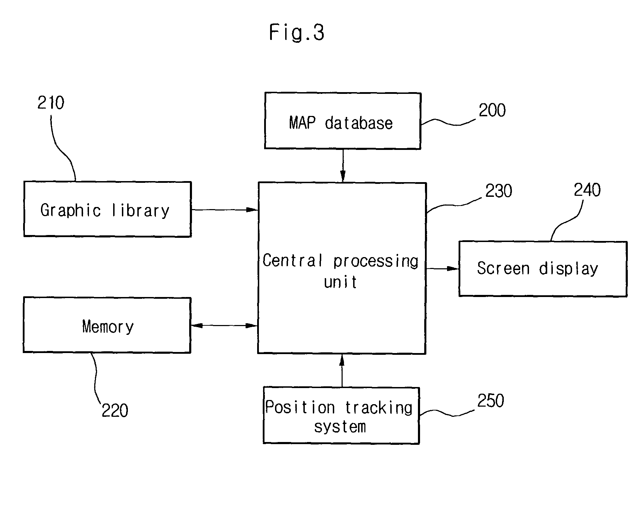

FIG. 3 is a block diagram showing a construction of a TBT navigation system according to the present invention.

Referring to FIG. 3, the TBT navigation system of the present invention includes a MAP database 200 for storing data necessary to create an intersection, a graphic library 210 for storing a basic arrow data, a memory 220 for storing a trigonometric function table and a coordinate of an arrow indicating a direction, a central processing unit 230 for creating a turn guide arrow to guide an intersection by using a basic function of the navigation, the basic arrow data and the trigonometric function table, and a screen display unit 240 for displaying the intersection together with the turn guide arrow. Additionally, a position tracking system 250 transmits a current position information to the central processing unit 230, in which the current position information is obtained using data provided from a GPS satellite.

Like other navigation systems, the central processing unit 230 determines a guide target based on the vehicle position information stored together with other data necessary to create the intersection, and also checks an intersection network to create a predetermined intersection, thereby creating the turn guide arrow to be displayed on the created intersection.

The MAP database 200 stores the data which is necessary to create the intersection and provided from the GPS satellite, e.g., the vehicle position information. An operation of the TBT navigation system constructed as above will be described below.

The central processing unit 230 uses a radio wave received from the GPS satellite through the position tracking system 250 to extract the data necessary to create the intersection, and then stores the extracted data into the MAP database 200.

At this time, if the driver inputs a destination, the TBT navigation system guides an optimum road which enables the driver to reach the destination at the shortest time.

In order for this, the central processing unit 230 checks an approach road which the vehicle approaches and a set of departing roads connected to the approach road by using the data necessary to create the intersection.

In this manner, if the approach road and the set of departing roads are checked for the purpose of creating the intersection, an approaching angle of the approach road, departing angles of the departing roads, and angles between the approach road and the departing roads from a direction of the due north are calculated. At this time, the approach road, the departing angles and the angles between the approach road and the departing roads exits in a range between 0° and 360° with respect to the direction of the due north.

The central processing unit 230 places the approach road vertically and then represents the set of departing roads in reference of the vertically placed approach road by use of the calculated angles between the approach road and the departing roads to thereby create one intersection. At this time, the approach road and the departing roads can be represented according to the trigonometric function values that are calculated using the trigonometric function table that is stored in the memory 220. Accordingly, since the set of departing roads are represented in reference of the vertically represented approach road, the created intersection is represented in a simpler shape.

The graphic library 210 includes a lower body, a center circle, an upper body and a head, line widths and colors of which are adjustable, that make it possible to distinguish them from each other. The parts of the arrow are preferably presented in the same color. The color of the pattern making up the intersection is preferably different from the color of the arrow.

The central processing unit 230 arranges the basic arrow data according to the approaching angle, in which the basic arrow data is configured with the lower body, the center circle, the upper body and the head, all of which are included in the graphic library 210.

At this time, in case one of the departing roads is selected and guided as a shortest route, a rotation angle is calculated using the angle between the approach road and the selected departing road. Then, the basic arrow data, specifically the upper body and the head, are rotated according to the calculated rotation angle to thereby create an intersection turn guide arrow. At this time, the turn guide arrow is placed on the selected departing road of the intersection. The turn guide arrow should preferably have a color that is different from the colour of the roads of the intersection. All roads of the intersection should preferably be formed with the same color.

The central processing unit 230 simultaneously displays the created intersection and the turn guide arrow created thereon.

Hereinafter, a method for guiding the intersection in the TBT navigation system constructed as above will be described.

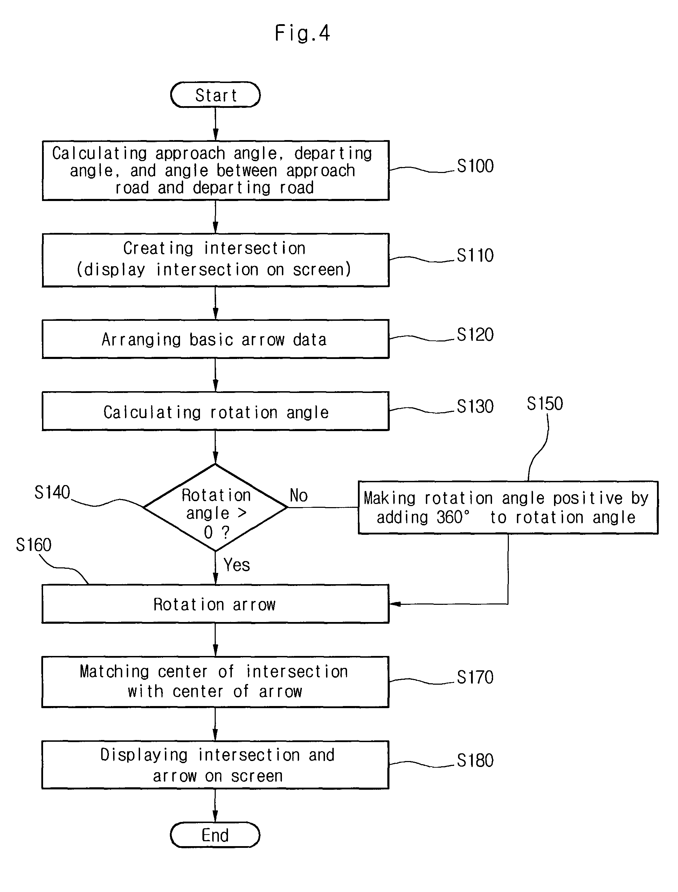

FIG. 4 is a flowchart showing a method for guiding the intersection in the TBT navigation system according to a preferred embodiment of the present invention.

Referring to FIG. 4, an intersection network is checked based on a vehicle position information. In other words, an approach road which the vehicle approaches and a set of departing roads connected to the approach road are checked. Then, the approaching angle of the approach road, the departing angles of the departing roads, and the angles between the approach road and the departing roads are calculated (S100).

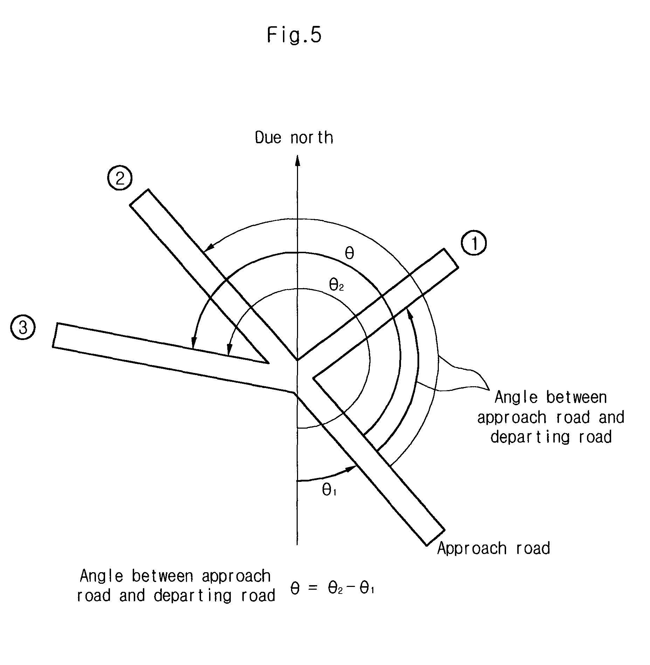

FIG. 5 is an exemplary view showing the process of calculating the angles of the roads configuring the intersection.

Referring to FIG. 5, the approaching angle $\theta_1$, the departing angle $\theta_2$ and the angle $\theta$ between the approach road and the departing road are calculated with respect to the due north. Here, the calculated angles are given in a range between 0° and 360° in a counterclockwise direction.

The approach road has the approaching angle $\theta_1$ of 30° with respect to the due north in a counterclockwise direction, and the departing roads(1), (2) and (3) have the departing angles of 110°, 210° and 260° with respect to the due north in a counterclockwise direction, respectively.

Accordingly, the angle between the approach road and the departing road (1) is about 80°, the angle between the approach road and the departing road (2) is about 180°, and the angle between the approach road and the departing road (3) is about 230°. In other words, assuming that the approaching angle of the road which the vehicle approaches is $\theta_1$ with respect to the due north and the departing angle of the road which the vehicle departs is $\theta_2$, the angle $\theta$ between the approach road and the departing road is calculated as follows:

$$\theta = \theta_2 - \theta_1$$

Here, the angle $\theta$ becomes a positive number when the departing angle $\theta_2$ is larger than the departing angle $\theta_1$, and the angle $\theta$ becomes a negative number when the departing angle $\theta_1$ is larger than the departing angle $\theta_2$.

Particularly, since the calculated angle $\theta$ is needed to represent the intersection in a simplified shape and also create the intersection turn guide arrow, it can be stored together with the approaching angle and the departing angle.

Then, after the approach road is vertically placed, the difference of departing roads are represented with reference of the vertically placed approach road according to the calculated angle $\theta$ to thereby create one intersection (S110). At this time, the created intersection can be displayed on a screen.

Here, when representing the set of departing roads, a trigonometric function value of the angle $\theta$ is obtained using the trigonometric function table and the set of departing roads are rotated according to the trigonometric function value.

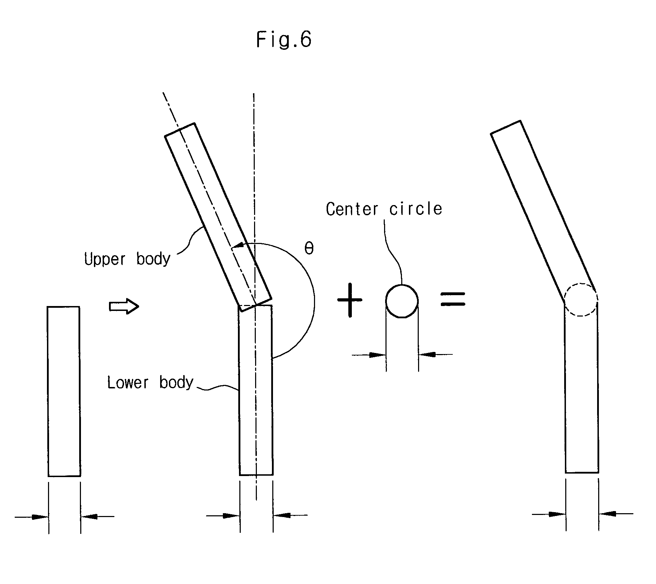

FIG. 6 is an exemplary view showing the process of creating the intersection in a simple shape.

As shown, the intersection guidance in the TBT navigation system performs a heading up by placing the approach road vertically and it is used as a standard in a representation of other roads. In other words, the approach road having a predetermined angle from the due north is placed on a vertical line, and other roads are represented using the angles between the approach road and each other road.

At this time, the width of the representation of each road is identical and each road is represented with straight lines each having predetermined width in order to minimize the number of points (coordinates) necessary to create an intersection , that is, straight lines each having a start point and an end point.

First, the approach road is placed vertically, and the departing road is rotated by the angle $\theta$ around the center of the intersection.

A start point of a straight line having a width and representing the approach road is matched with the center of the intersection, and an end point of a straight line having a width and representing the departing road is matched with the center of the intersection. Thereafter, the trigonometric function table stored in the memory 220 is used to obtain a coordinate value for the starting point of the straight line representing the departing road from a trigonometric function with respect to the angle between the approach road and the departing road. The coordinate of the start point of the departing road is moved according to the obtained coordinate value. At this time, since the start and end points of the straight line representing the approach road or the start and end points of the straight line representing the departing road are a relative concept, they can be moved with respect to each other and rotated.

According to one embodiment of the invention a gap between the approach road and the departing road due to the rotation is filled by placing a circle, whose diameter is identical to the width of the straight line representing the road, on the center of the intersection.

In this manner, the intersection can be configured with the departing roads (1) and (2) rotated by the angles between the approach road and the departing roads.

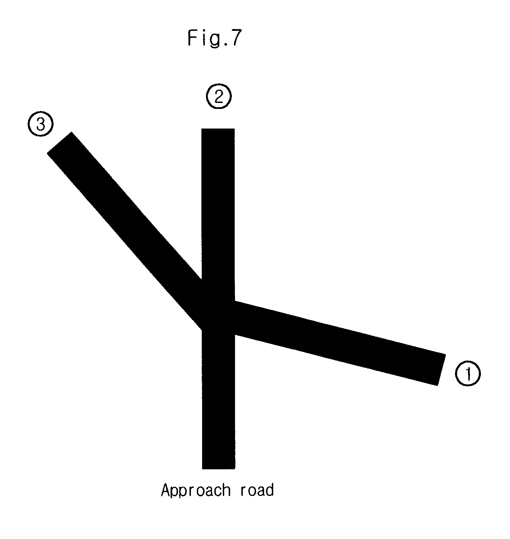

FIG. 7 is a view of the intersection that is completely created through the simplifying process.

As shown, the departing roads (1), (2) and (3) are rotated in a counterclockwise direction with respect to the vertically headed-up approach road such that they are formed spaced apart by the angles between the approach road and each road. At this time, the color of each road is identical to that of the center circle of the intersection.

Then, the basic arrow data provided with a lower body, a center circle, an upper body and a head are arranged in a direction of the approach road (S120). Here, an end point of the upper body is matched with a start point of the lower body. Additionally, a center of the center circle, whose width is identical to those of the upper body and the lower body, is matched with a center of the basic arrow data, so that a gap occurring due to the rotation can be filled.

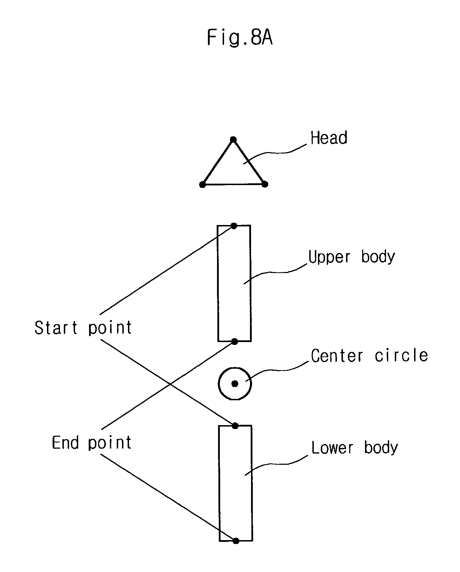

FIGs. 8A to 8C are views showing a process of creating the turn guide arrow.

FIG. 8A is a view showing each component of the basic arrow data. The basic arrow data includes the head, the upper body, the lower body and the center circle. At this time, for the purpose of minimization in the number of points used for the rotation, the upper body and the lower body, which are the straight lines having predetermined width, are represented using only the start point and the end point. The center circle has a diameter identical to the width of the straight lines which configure the upper body and the lower body. The head is represented with a triangle having three points.

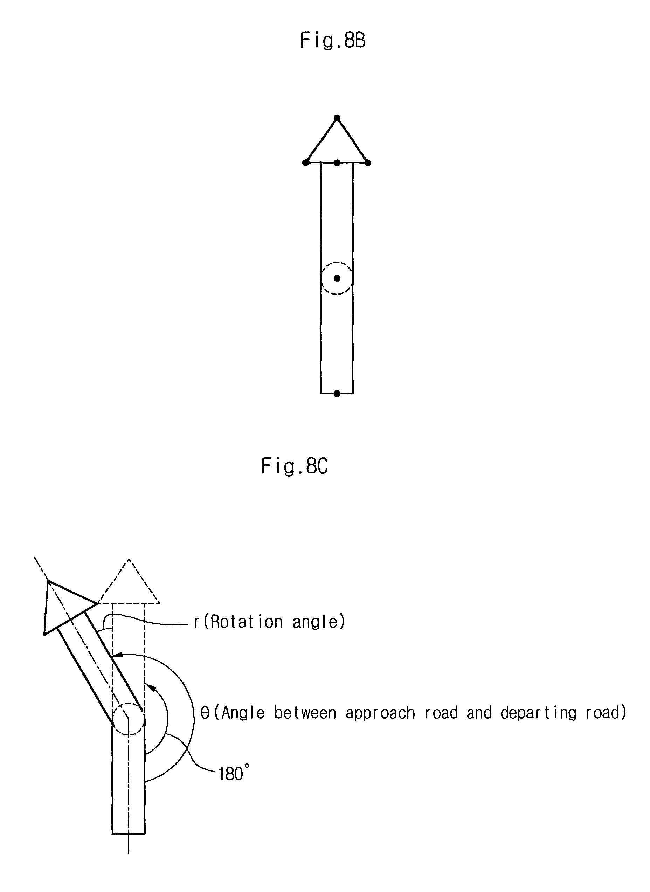

Accordingly, as shown in FIG. 8B, the end point of the upper body and the start point of the lower body are matched with each other, and a center of a lower side of the triangle is matched with the start point of the upper body. Additionally, the center of the basic arrow data is matched with the center of the center circle having the diameter identical to each width of the upper body and the lower body, so that the gap due to the rotation can be filled.

If the basic arrow data is arranged according to the direction of the approach road, the rotation angle r is calculated using the angle θ with respect to the desired departing road (S130). At this time, since the basic arrow data of FIG. 8B is in a state that the upper body is already rotated by 180°, the rotation angle r can be an angle obtained by subtracting 180° from the angle θ with respect to the desired departing road. For example, in case the angle θ between the approach road and the desired departing road (3) is 230°, the rotation angle can be 50° which is calculated from (230°-180°). Accordingly, the upper body and the head of the basic arrow data are rotated from their original positions by 50° in a counterclockwise direction.

Meanwhile, it is determined whether or not the calculated rotation angle is positive (S140). If the rotation angle is negative, 360° is added to the calculated rotation angle to thereby make the negative rotation angle to a positive number. In other words, all of the calculated rotation angles must be a positive number. When referring to the trigonometric function table, "angles" are used as an index. These angles must exist in a range between 0° and 360° as the positive number.

The upper body and the head of the basic arrow data are rotated according to the calculated rotation angle (S160).

FIG. 8C is a view of the completed intersection turn guide arrow. As shown, the upper body and the head are rotated by the rotation angle r in a counterclockwise direction, and the lower body of the turn guide arrow is matched with the direction of the approach road. The upper body and the head are matched with the direction of the desired departing road. At this time, it is desired that the colors of the head, the upper body, the center circle and the lower body, which configure the turn guide arrow, are identical to each other.

Then, the center of the created turn guide arrow is matched with that of the created intersection (S170).

The intersection having the turn guide arrow is displayed on the screen at the same time (S180).

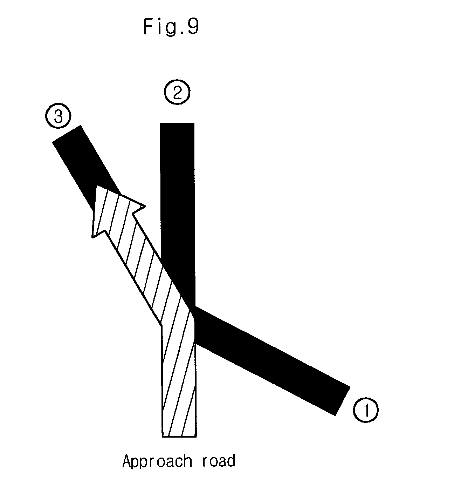

FIG. 9 is an exemplary view showing the displayed intersection having the turn guide arrow.

The approach road of the intersection and the lower body of the turn guide arrow must be matched with each other. The "matching" does not means that the width and the length are matched, but means that the lower body of the turn guide arrow is displaced on the vertical line like the approach road, which is matched on the vertical line, and the end point of the lower body (i. e., the center of the turn guide arrow) is matched with the center of the intersection. Further, the color of the intersection should preferably be matched with that of the turn guide arrow such that the intersection has a different color from the guide arrow.

According to the TBT navigation system of the present invention, the turn guide arrow can provide the route from the approaching to the desired departing so as to enable the driver to correctly drive the vehicle to the destination.

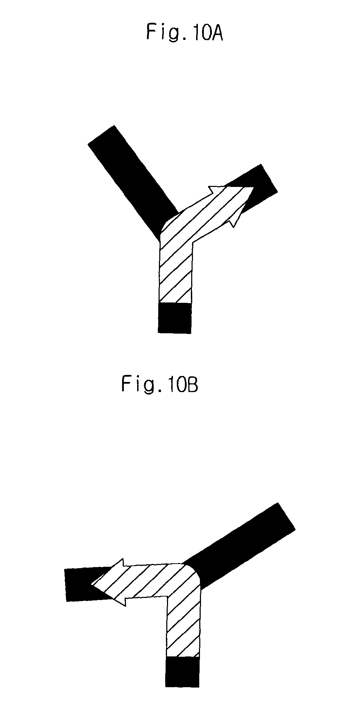

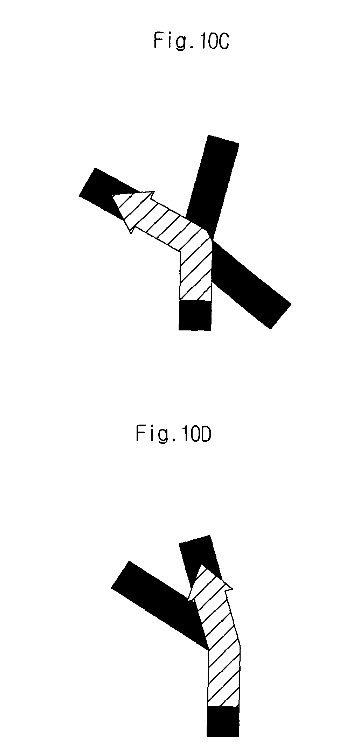

FIGs. 10A to 10D are exemplary views showing an application of various actual intersections in the intersection guidance according to the present invention.

FIG. 10A illustrates a first example of the intersection guidance according to the TBT navigation system of the present invention, in case the vehicle approaches and turns right at a three-forked road. As shown, the turn guide arrow indicates that the vehicle must turn right toward a northeast departing road by about 120° from the approach road in a counterclockwise direction.

FIG. 10B illustrates a second example of the intersection guidance according to the TBT navigation system of the present invention, in case the vehicle approaches and turns left at a three-forked road. As shown, the turn guide arrow indicates that the vehicle must turn left toward a southwest departing road by about 290° from the approach road in a counterclockwise direction.

FIG. 10C illustrates a third example of the intersection guidance according to the TBT navigation system of the present invention, in case the vehicle approaches and turns left at a crossroad. As shown, the turn guide arrow indicates that the vehicle must turn left toward a northwest departing road by about 230° from the approach road in a counterclockwise direction.

FIG. 10D illustrates a fourth example of the intersection guidance according to the TBT navigation system of the present invention, in case the vehicle approaches and turns obliquely left at a three-forked road. As shown, each of two departing roads connected with the approach road are formed densely. At this time, the turn guide arrow indicates that the vehicle must turn obliquely left toward a northwest departing road by about 190° from the approach road in a counterclockwise direction.

Like the various intersections (e.g., the three-forked road or the crossroad) shown in FIGS. 10A to 10D, the intersections having various angles may exist actually. Additionally, the visuality can be remarkably improved by simultaneously displaying the multi-angle intersection turn guide arrow, which has high visualization, and the simplified shape of the actual intersection.

As described above, according to the method and apparatus for guiding the intersection in the navigation system, the intersection is created and displayed together with the rotate guide arrow when guiding the vehicle to the destination, thereby providing the drive with the guidance having an improved visuality so as to enable the vehicle to turn correctly.

According to the method and apparatus for guiding the intersection in the navigation system of the present invention, when creating the intersection guide arrow and the intersection, the number of points used to rotate a straight line, a polygon and a circle, all of which have their widths, are minimized. By using the trigonometric coordinate values obtained from the indexes of the trigonometric function table according to the rotation angles, the calculation amount is minimized so that the intersection guide arrow having free angle and the shape of the intersection can be created more rapidly. Therefore, the driver can check the approaching and the turn at the intersection as rapid as possible.

Since the intersection and the turn guide arrow can be created through the minimum calculation amount, the present invention is applicable to vehicles, vessels and airplanes as well as small-capacity terminals.

It will be apparent to those skilled in the art that various modifications and variations can be made in the present invention. Thus, it is intended that the present invention covers the modifications and variations of this invention provided they come within the scope of the appended claims and their equivalents.

**Claims**

1. A method for guiding an intersection, comprising the steps of:

   checking an intersection network to create a predetermined intersection based on a vehicle position information;
   creating a turn guide arrow to be displayed on the intersection; and
   simultaneously displaying the intersection and the turn guide arrow created thereon.

2. The method of claim 1, wherein the step of creating the predetermined intersection comprises the steps of:

   calculating an approaching angle of an approach road that the vehicle approaches, departing angles of a set of departing roads connected to the approach road, and angles between the approach road and the difference of departing roads from a predetermined set direction;
   vertically placing the approach road; and
   representing the set of departing roads in reference of the approach road placed vertically by use of the calculated angles between the approach road and the departing roads.

3. The method of claim 2, further comprising the step of storing the approaching angle, the departing angles, and the angles between the approach road and the departing roads.

4. The method of claim 2, wherein the set of departing roads are represented by use of a trigonometric function value calculated from a trigonometric function table.

5. The method of claim 1, wherein the step of creating the turn guide arrow comprises the steps of:

arranging a basic arrow, the basic arrow provided with a lower body, an upper body and a head;
if a vehicle is guided by selecting one of the departing roads, calculating a rotation angle by using the angle between the approach road and the selected departing road; and
rotating the upper body and the head according to the calculated rotation angle.

6. The method of claim 5, wherein the basic arrow is provided with a center circle

7. The method of claims 5 or 6, wherein the rotation angle is an angle obtained by subtracting 180° from the angle between the approach road and the selected departing road.

8. The method of claim 5, 6 or 7, further comprising the step of converting the rotation angle into a positive number.

9. The method of claim 8, wherein 360° is added to the rotation angle if the rotation angle is a negative number.

10. The method of any of claims 1 - 9 , further comprising the step of matching a center of the turn guide arrow with a center of the intersection.

11. An apparatus for guiding an intersection, comprising:

means for checking an intersection network to create a predetermined intersection based on a vehicle position information;
means for create a turn guide arrow to be displayed on the intersection; and
means for simultaneously displaying the intersection and the turn guide arrow created thereon.

12. The apparatus of claim 11, wherein the means for generating the intersection comprises:

means for calculating an approaching angle of an approach road which the vehicle approaches, a departing angle of a set of departing roads connected to the approach road, and angles between the approach road and the set of departing roads from a predetermined set direction;
means for vertically placing the approach road; and
means for representing the set of departing roads in reference of the approach road placed vertically by use of the calculated angles between the approach road and the departing roads from the approach road placed vertically.

13. The apparatus of claim 11 or 12, further comprising a means for storing the approaching angle, the departing angle, and the angles between the approach road and the departing road.

14. The apparatus of claim 11, wherein the means for creating the turn guide arrow comprises:

means for arranging a basic arrow, the basic arrow being providing with a lower body, an upper body and a head;
means for calculating a rotation angle by using the angle between the approach road and a selected departing road if the vehicle is guided by selecting one of the departing roads; and
means for rotating the upper body and the head according to the calculated rotation angle.

15. The apparatus of claim 14, wherein the basic arrow being providing with a center circle.

16. The apparatus of claim 14 or 15, wherein the rotation angle is an angle obtained by subtracting 180° from the angle between the approach road and the selected departing road.

17. The apparatus of claim 14 or 15, further comprising a means for converting the rotation angle into a positive number.

18. The apparatus of claim 17, wherein 360° is added to the rotation angle if the rotation angle is a negative number.

19. The apparatus of any of claims 11 - 18, further comprising the means for matching a center of the turn guide arrow with a center of the intersection.

20. A navigation system comprising:

means (200) for storing data necessary to create an intersection;
means (210) for storing a basic arrow data;
a memory (220)storing a coordinate of an arrow for indicating a direction and a trigonometric function table;
a central processing unit (230) for guiding at an intersection with a turn guide arrow by using the data necessary to create the intersection, the basic arrow data and the trigonometric function table; and
means for displaying (240) the intersection with the turn guide arrow, wherein the central processing unit includes:

means for checking an intersection network to create a predetermined intersection based on a vehicle position information,; and
means for creating the turn guide arrow to be displayed on the created intersection.

21. The navigation system of claim 20, wherein the means for storing the basic arrow data includes a lower body, a center circle, an upper body and a head, whose line widths and colors are adjustable.

Fig. 1A
Related Art

Departing road(B)

210°

Approach road(A)

Actual intersection

Fig. 1B
Related Art

Left turn

Guidance using image

Fig.1C
Related Art

Guidance using only arrow

Fig.2
Related Art

| | |
|---|---|
| Jeil Life crossroad | 110 |
| 300m | 130 |
| 1.7Km | 140 |
| 39.00 | 150 |
| General road | 160 |
| Up   East ⇧ ●   Path | 170 |

100

120

Fig.3

210

MAP database — 200

Graphic library → Central processing unit — 230

Screen display — 240

Memory ↔

220

Position tracking system — 250

Fig.4

```
              ┌──────────┐
              │  Start   │
              └────┬─────┘
                   │
   ┌───────────────▼──────────────────┐
   │ Calculating approach angle, departing │───── S100
   │ angle, and angle between approach │
   │    road and departing road        │
   └───────────────┬──────────────────┘
                   │
   ┌───────────────▼──────────────────┐
   │     Creating intersection          │───── S110
   │ (display intersection on screen)  │
   └───────────────┬──────────────────┘
                   │
   ┌───────────────▼──────────────────┐
   │    Arranging basic arrow data      │───── S120
   └───────────────┬──────────────────┘
                   │
   ┌───────────────▼──────────────────┐
   │    Calculating rotation angle      │───── S130        S150
   └───────────────┬──────────────────┘
                   │
           ┌───────▼───────┐                   ┌──────────────────────────────┐
   S140    │   Rotation    │   No              │ Making rotation angle positive by │
   ────────│   angle >     │──────────────────▶│  adding 360° to rotation angle   │
           │     0 ?       │                   └──────────────────────────────┘
           └───────┬───────┘
                   │ Yes
   S160            │
   ┌───────────────▼──────────────────┐
   │       Rotation arrow              │◀─────────────────────┘
   └───────────────┬──────────────────┘
                   │
   ┌───────────────▼──────────────────┐
   │  Matching center of intersection   │───── S170
   │      with center of arrow          │
   └───────────────┬──────────────────┘
                   │
   ┌───────────────▼──────────────────┐
   │    Displaying intersection and     │───── S180
   │        arrow on screen             │
   └───────────────┬──────────────────┘
                   │
              ┌────▼─────┐
              │   End    │
              └──────────┘
```

Fig.5

Due north

② ① ③

θ

θ₂

θ₁

Angle between
approach road and
departing road

Approach road

Angle between approach
road and departing road  $\theta = \theta_2 - \theta_1$

Fig.6

Upper body

Center circle

θ

+

=

Lower body

Fig.7

③

②

①

Approach road

Fig.8A

Head

Upper body

Start point

Center circle

End point

Lower body

Fig.8B

Fig.8C

r(Rotation angle)

θ(Angle between approach road and departing road)

180°

Fig.9

Approach road

Fig. 10A

Fig. 10B

Fig.10C

Fig.10D